# FASCICULE DE BREVET EUROPEEN

(11) **EP 2 380 322 B1**
(45) Date de publication et mention de la délivrance du brevet: **03.09.2014**
(21) Numéro de dépôt: 10703310.2
(22) Date de dépôt: 08.01.2010
(51) Int. Cl.: H04L 25/03, H04L 27/26, H03M 1/08

(54) **PROCEDE ET DISPOSITIF DE REDUCTION DU BRUIT DE QUANTIFICATION POUR LA TRANSMISSION D'UN SIGNAL MULTIPORTEUSE**
VERFAHREN UND VORRICHTUNG ZUR MINIMIERUNG VON QUANTIFIZIERUNGSRAUSCHEN ZUR SENDUNG EINES MEHRTRÄGERSIGNALS
METHOD AND DEVICE FOR REDUCING QUANTIFICATION NOISE FOR TRANSMITTING A MULTI-CARRIER SIGNAL

(30) Priorité: 19.01.2009 FR 0900231
(43) Date de publication de la demande: 26.10.2011
(73) Titulaire: MStar Semiconductor, Inc., Taiwan 302 (TW)
(72) Inventeur: ISSON, Olivier, F-92340 Bourg-la-Reine (FR)
(74) Mandataire: Bethenod, Marc
(86) Numéro de dépôt international: PCT/FR2010/000016
(87) Numéro de publication internationale: WO 2010/081960

(56) Documents cités:
- WO-A1-03/063160
- US-A- 5 157 396

## Description

### DOMAINE TECHNIQUE DE L'INVENTION

L'invention se rapporte au domaine des communications numériques et plus particulièrement au domaine de la réduction de bruit dans les transmissions numériques.

### ETAT DE LA TECHNIQUE ANTERIEURE

L'invention s'applique particulièrement dans le domaine de la modulation par codage en multiples sous-porteuses (ci-après : multiporteuses), également appelé OFDM (initiales de « Orthogonal Frequency Division Multiplexing ", à savoir : codage de signaux numériques par répartition en fréquences orthogonales). Le principe général de la modulation OFDM consiste à diviser la bande de fréquences en N sous-bandes, N étant généralement une puissance de deux et chaque sous-bande transmettant l'information au moyen d'une sous-porteuse.

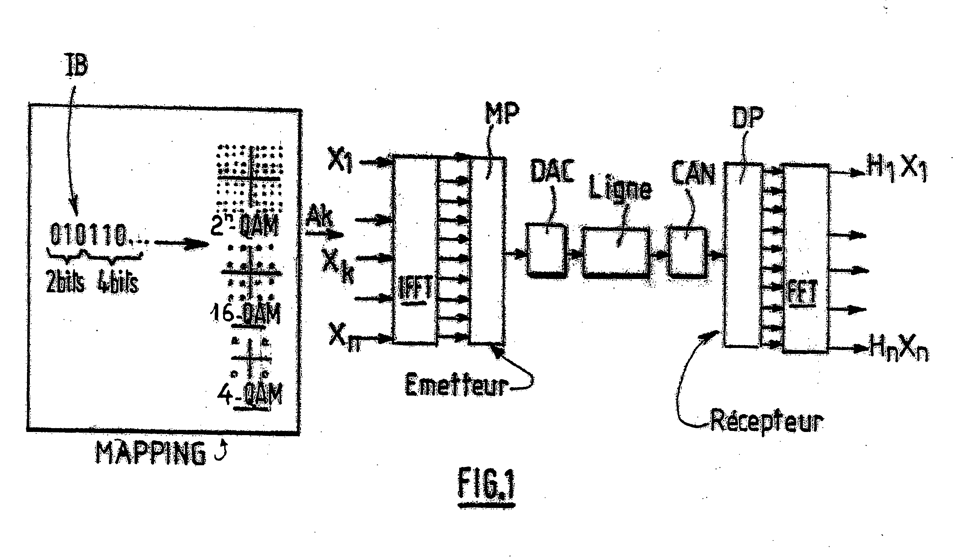

En référence à la figure 1, la modulation multiporteuse de transmission d'une information binaire IB procède d'abord à la conversion (« Mapping » en anglais) de groupes de bits (2 bits, 4 bits,...) en nombres complexes modulés en QAM de 2ⁿ bits, pour obtenir le vecteur de fréquences à N composantes complexes X₁,...X_{N} à émettre. Ce vecteur est ensuite transformé du domaine fréquentiel en données temporelles au moyen d'un convertisseur fréquence/temps, par exemple une IFFT (initiales de « Inverse Fast Fourier Tranform » : Transformée de Fourier Rapide Inverse) puis multiplexées dans un multiplexeur MP. Ces données sont alors converties au moyen d'un convertisseur numérique-analogique, dit convertisseur CNA ou DAC (initiales de « Digital Analogic Converter » en anglais), envoyées sur la ligne et réceptionnées par l'enchaînement de traitements inverses - convertisseur analogique-numérique CAN, démultiplexeur DP, Transformée de Fourier Rapide IFF - , pour obtenir le vecteur de fréquences à N composantes H₁X₁,...,H_{N}X_{N} en réception.

Cette technique est utilisée dans de nombreux standards de télécommunication et permet donc de diviser la bande utile en N sous-bandes indépendantes.

Une étape essentielle de la transmission de données numérique est la conversion des signaux numériques en signaux analogiques. Pour cela, le convertisseur CNA travaille à la fréquence d'échantillonnage du signal numérique, utilisant un nombre de bits fixe pour la représentation du signal d'entrée.

Le signal numérique d'entrée est alors quantifié et donc subit des troncatures. Afin de satisfaire les contraintes du CNA, par exemple dans le cas d'un CNA de 10 bits, le signal numérique est représenté sur 10 bits exactement avant d'être transmis. Cette étape de quantification crée un bruit, appelé bruit de quantification, lequel est présent dès la transmission du signal. Ce bruit peut alors limiter fortement les performances du système.

De plus, lorsque le signal transmis présente des variations de puissance en fonction de la fréquence, alors le bruit de quantification affecte les fréquences porteuses du signal émis dans un rapport RSB (rapport signal sur bruit ou RSB en anglais) différent en fonction de la fréquence d'émission, ce qui peut entraîner une baisse de performance. Cet effet résulte du fait que l'ensemble des modulations disponibles (QPSK initiales de Quadrature Phase Shift Keying_en anglais, c'est-à-dire : modulation par déplacement de phase quadrtique) QAM (initiales de Quadrature and Amplitude Modulation en anglais, c'est-à-dire : modulation d'amplitude en quadratique, ou autre) à attribuer aux sous-porteuses est limité : au-delà d'un certain rapport RSB (par exemple 30 dB) une perte de RSB se traduit toujours par une perte de performance, alors qu'un gain du rapport RSB ne se traduira pas par un gain de performance lorsque le type de modulation offrant le débit maximum (par exemple QAM1024) est atteint.

Or des contraintes sont en général imposées sur la puissance d'émission, cette puissance ne devant pas dépasser un certain niveau. Ce niveau maximal peut être fixé par une norme. Une telle contrainte est notamment présente lors de transmission sur courant porteur, ou PLC (initiales de « Power Line Communication »), contrainte imposant une limitation de la densité spectrale de puissance sur la bande de 0 à 30 MHz à une puissance de -50 dBm/Hz, et de-80 dBm/Hz sur la bande de 30 à 300 MHz.

Dans l'exemple de cette norme, il convient donc d'abaisser de 30 dB la puissance des porteuses supérieures à 30 MHz. Pour cela, une méthode classique illustrée en figure 1, consiste à pré-multiplier, avant l'application de la transformation inverse IFFT, chaque composante complexe Xk, par un coefficient Ak afin de pouvoir appliquer une puissance variable au signal à transmettre. Dans cet exemple, les coefficients Ak sont choisis pour que toutes les porteuses correspondant à une fréquence supérieure à 30 MHz soient alors abaissées de 30 dB.

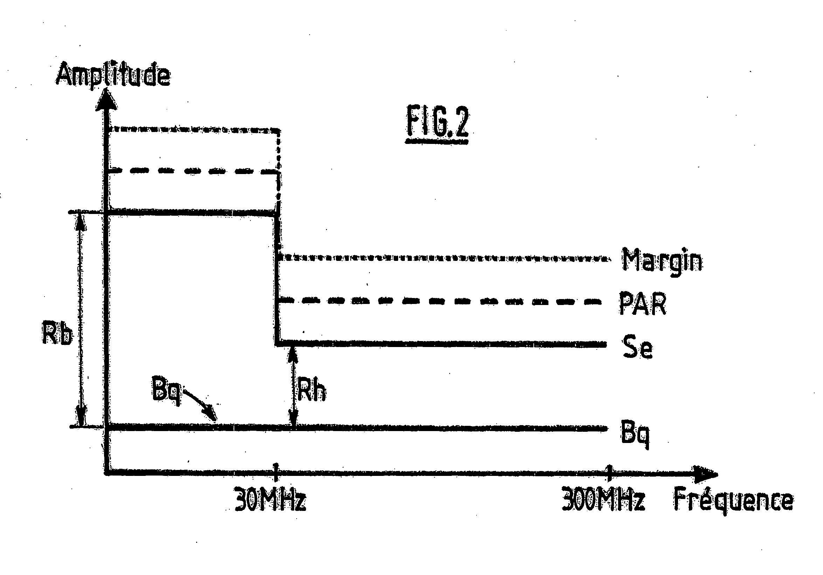

La figure 2 représente l'amplitude des signaux en fonction de la fréquence dans le domaine spectral. Quelle que soit la densité spectrale de puissance du signal transmis, le bruit de quantification Bq est plat. Ce bruit de quantification n'a donc pas la même forme que le signal effectif émis Se qui varie en fonction des bandes spectrales (bande basse: 0-30 MHz et bande haute supérieure à 30 MHz). Il en résulte que la bande basse a un rapport signal sur bruit RSB moyen Rb bien supérieur à celui de la bande haute. Ainsi, sur l'exemple présenté, avec un convertisseur de 10 bits, la bande haute a un rapport RSB (Rh) limité à 20 dB, ce qui est pénalisant et limite fortement le débit, alors que le rapport Rb de la bande basse est supérieure à 40 dB, ce qui est tout à fait acceptable. Le signal limitant pour le rapport RSB est le signal effectif Se, les autres signaux (pics moyens « PAR » et marginaux « Marge »), parallèles au signal effectif et sensiblement supérieurs, présentent des rapports RSB également supérieurs.

Une solution connue de réduction du bruit de quantification dans la bande haute (supérieure à 30 MHz) consiste à augmenter le nombre de bits du convertisseur, car plus il a de bits et plus le bruit de quantification sera faible. Par exemple, avec un convertisseur à 15 bits, le rapport RSB de la figure 2 devient supérieur à 40 dB sur toutes les bandes.

L'inconvénient de cette solution est le coût sensiblement plus élevé des convertisseurs utilisant un grand nombre de bits en entrée.

Une autre solution consiste à utiliser deux convertisseurs, un pour chaque bande, ce qui aurait pour effet d'obtenir un RSB acceptable dans chaque bande. L'inconvénient de cette méthode est également le coût élevé des convertisseurs.

Afin de réduire le bruit de quantification, il est par ailleurs connu du document de brevet FR 2730590 une méthode de rétroaction du signal fourni à l'entrée d'un circuit de quantification pour réduire le bruit de quantification. Le signal de rétroaction est généré comme une différence filtrée entre un échantillon du signal de N bits et un échantillon coïncidant dans le temps d'un signal quantifie de M bits, où M est inférieur à N. Le signal de rétroaction est soustrait au signal d'entrée avant la quantification, introduisant ainsi du bruit hors bande dans le signal d'entrée pour réduire le bruit de bande dans le signal quantifié.

Ce type de réducteur de bruit travaille dans l'adaptation du signal avant la conversion Digital-Analogique pour intégrer le bruit de conversion. Ce réducteur ne présente pas une grande efficacité car le signal de rétroaction n'est pas aisé à mettre en oeuvre.

### EXPOSE DE L'INVENTION

La présente invention se propose de réduire le niveau du bruit de quantification lorsque la puissance d'émission varie avec la fréquence.

Pour ce faire, il est proposé d'effectuer la variation de puissance dans le domaine analogique en effectuant un filtrage d'une bande de fréquences et une atténuation d'une bande complémentaire dans une autre voie de traitement analogique du signal.

Plus précisément, la présente invention a pour objet un procédé de réduction de bruit de quantification pour la transmission d'un signal multiporteuse, comportant une étape de transformation du signal fréquence-temps, une étape de conversion Numérique-Analogique puis une étape de traitement analogique des fréquences du signal sur une bande présentant une fréquence maximale, l'étape de traitement analogique comportant au moins deux voies de traitement en parallèle du signal analogique, dans lesquelles un filtrage analogique coupant une partie de la bande de fréquences est appliqué sur au moins l'une des voies et, parallèlement, dans au moins une autre voie, un gain est appliquée au signal, puis dans une étape finale, les signaux issus des voies sont sommés.

Dans des modes de réalisations particuliers :

- le gain est négatif, le signal subissant une atténuation, lorsque la puissance du signal est plus alignée sur celle de la ou des bande(s) haute(s) et le gain est posiitif, le signal étant amplifié, lorsque la puissance du signal est plus alignée sur la ou les bande(s) basse(s).

- une étape préalable de pré-égalisation du signal adapte les puissances sur les porteuses afin de compenser au moins une étape ultérieure de filtrage analogique ;

- dans la au moins deuxième voie de l'étape de traitement analogique, le signal est filtré sur une bande de fréquences hautes comprenant les fréquences supérieures à la bande basses fréquences filtrée dans la première étape, jusqu'à la fréquence maximale du signal ;

- le filtrage passe-bande de la au moins deuxième voie est effectué préalablement à l'atténuation du signal de la même étape.

L'invention a également pour objet un dispositif de réduction de bruit de quantification pour la transmission d'un signal multiporteuse comportant un bloc IFFT présentant une entrée couplée pour recevoir un signal numérique [en sortie du pré-égaliseur], un convertisseur DAC présentant une entrée couplée pour recevoir le signal en sortie du bloc IFFT, puis au moins deux voies d'un circuit de traitement analogique couplées en sortie du DAC, dont une première voie de traitement comportant un LPF (initiales de « Low-Pass Filter » en anglais) et une seconde voie comportant un gain atténuateur, les deux voies se combinant dans un sommateur.

Selon des modes de réalisation particuliers :

- le dispositif comporte un pré-égaliseur du signal numérique couplé en entrée du bloc IFFT ;

- la au moins deuxième voie comporte en outre un filtre passe-bande ;

- le filtre passe-bande est placé préalablement au gain atténuateur.

### BREVE DESCRIPTION DES FIGURES

[001]D'autres caractéristiques et avantages de l'invention ressortiront à la lecture de la description détaillée d'exemples de réalisation qui suit, en référence aux figures annexées qui illustrent, respectivement :
- la figure 1, un schéma de principe de la modulation OFDM (déjà commentée) ;
- la figure 2, un diagramme de variation des amplitudes des signaux et du bruit de quantification en fonction des bandes de fréquence émises (déjà commentée);
- la figure 3, un exemple non limitatif à deux voies d'un dispositif de réduction de bruit de quantification selon l'invention ;
- la figure 4, une variante de réalisation selon la figure 3 équipée d'un filtre passe-bande ;
- la figure 5, un exemple de réalisation d'un dispositif avec amplification sur l'une des voies de traitement ; et
- la figure 6, le diagramme selon la figure 2 obtenu dans le cadre de l'invention.

Pour plus de clarté, les éléments identiques ou similaires sont repérés par des signes de référence identiques sur l'ensemble des figures.

### DESCRIPTION DETAILLEE D'UN MODE DE REALISATION

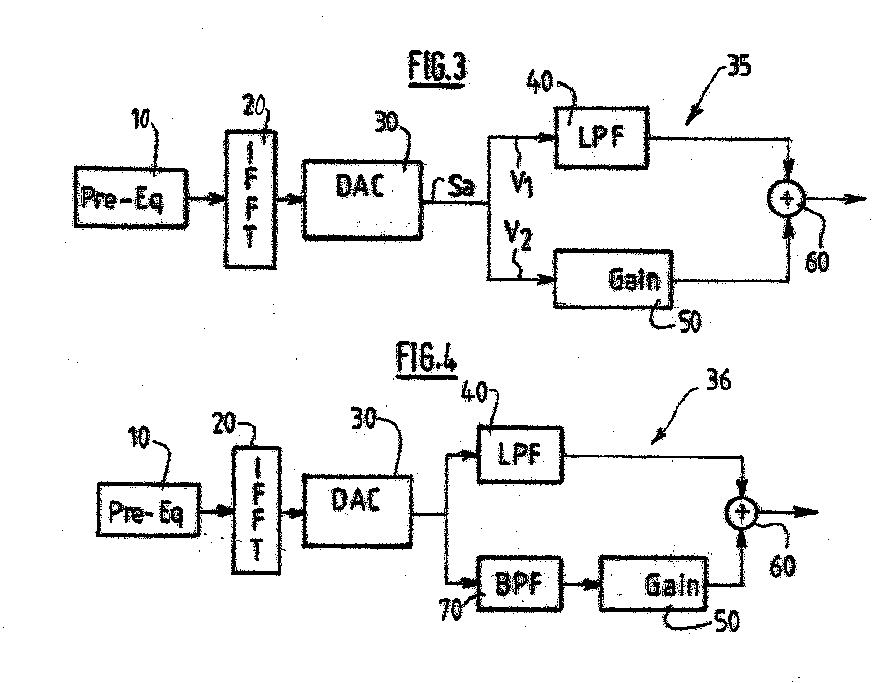

Dans un premier exemple de réalisation selon la figure 3, un Pre-égaliseur 10 du signal S est couplé à l'entrée d'un bloc IFFT 20, lui-même couplé à un convertisseur DAC 30.

Le Pré-égaliseur 10 module linéairement les composantes complexes des sous-porteuses du signal S pour leur appliquer des puissances variables. La modulation est calculée pour que ce pré-réglage compense par anticipation les effets du filtrage analogique ultérieur en faisant varier les puissances sur les porteuses.

L'IFFT transforme ensuite le signal du domaine fréquentiel vers le domaine temporel pour permettre sa conversion en signal analogique par échantillonnage dans le DAC 30. Dans l'exemple, le convertisseur 30 fonctionne à la fréquence de 200MHz, pour une bande de fréquences à traiter allant de 0 à 100 MHz. D'un point de vue général, un convertisseur DAC fonctionne à une fréquence équivalente à deux fois la fréquence maximale de la bande à traiter.

En sortie du convertisseur 30, le signal analogique Sa est transmis dans un circuit de traitement analogique 35 comportant deux voies parallèles V1 et V2. La première voie V1 fait traverser au signal Sa un filtre passe-bas LPF 40 (initiales de « Low-Pass Filter » en anglais) à la fréquence de coupure de 30MHz, afin de conserver intacte la bande basses fréquences 0-30MHz, dite bande basse, provenant du convertisseur 30, et d'atténuer fortement les fréquences supérieures à cette fréquence de coupure.

La au moins deuxième voie V2 impose une atténuation de -30dB à l'intégralité du signal Sa, par un gain du signal sur cette voie à travers un amplificateur 50.

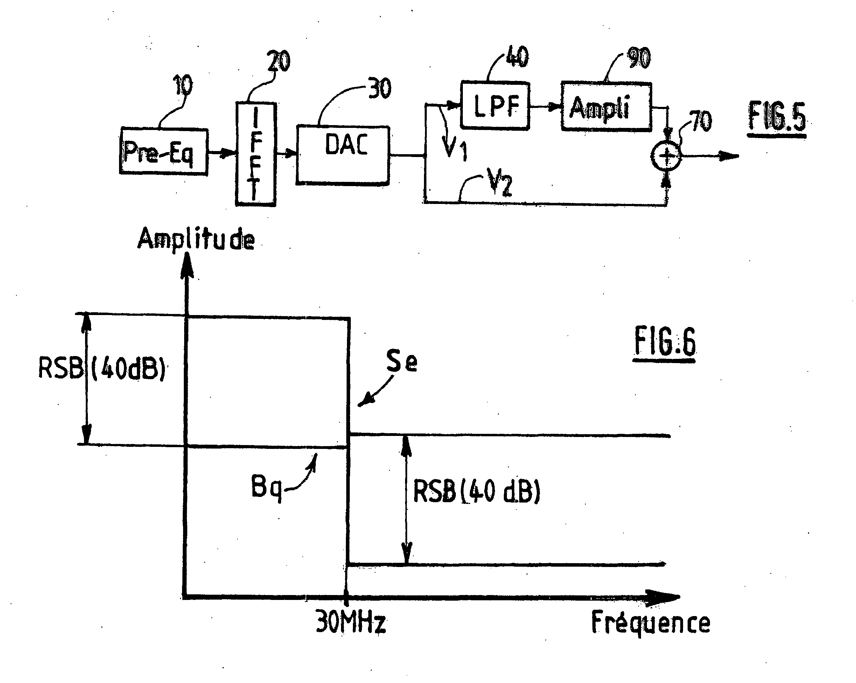

Ces deux voies sont réunies à l'aide d'un sommateur de voies 60 fournissant alors, en sortie, un signal Sa atténué de 30 dB sur la bande fréquences hautes 30-100MHz (dite bande haute), et non atténué sur la bande 0-30MHz, du fait des traitements de filtrage et d'atténuation sur respectivement les voies V1 et V2, tout en présentant un rapport RSB acceptable pour toute la bande comme illustré plus loin en référence à la figure 5.

Le pré-égaliseur 10 préfixe un gabarit de puissance sur la bande basses fréquences de sorte que l'atténuation de 30dB sur cette bande soit compensée par ce gabarit dans la voie V2 et que le signal une fois sommé reste identique dans la bande basse 0-30MHz.

Une variante de réalisation est illustrée en référence à la figure 4. Le signal limité à la bande 0-100 MHz est transmis, de la même façon que dans l'exemple précédent, par passage dans le pré-égaliseur 10 d'adaptation des puissances des porteuses du signal, le transformateur IFFT 20 et le convertisseur DAC 30 à 200MHz.

Le signal en sortie du convertisseur 30 est alors transmis dans le circuit de traitement analogique à deux voies 36. La première voie V1 reste identique et fait passer le signal dans le filtre LPF 40 à fréquence de coupure de 30Mhz.

La deuxième voie V2 fait passer le signal dans un filtre passe-bande BPF 70 (initiales de « Band-Pass Filter » en anglais) pour sélectionner la bande haute 30-100 MHz dans cette voie. L'amplificateur 50 applique ensuite un gain de -30 dB à cette bande de fréquences hautes. Les deux voies sont ensuite sommées par le sommateur 60 et le gain du signal en sortie est identique pour la bande basse 0-30MHz et atténué de 30dB pour la bande haute 30-100MHz, tout en garantissant un bon RSB sur toute la bande.

L'introduction d'un filtre passe bande haute sur la voie V2 et la présence d'un filtre passe bas sur la voie V1 présente l'avantage de sectoriser les bandes sur les voies et de n'appliquer l'atténuation de 30 dB que, spécifiquement, sur la bande haute 30-100 MHz.

Pour assurer une sommation précise en sortie des deux voies, le préégaliseur anticipe l'affaiblissement du signal autour de la fréquence de coupure des filtres 40 et 70 en augmentant la puissance des porteuses autour de 30MHz.

Dans un autre exemple de réalisation, illustré en figure 5, le signal de la bande basse est filtré par le filtre LPF 40 sur la voie V1 puis, sur cette même voie, amplifié par l'application d'un amplificateur 90, alors que le signal de la bande haute ne subit pas de modification et est transmis par la voie V2. Cette réalisation est avantageusement adoptée lorsque la puissance du signal en sortie du DAC 30 est sensiblement alignée sur la puissance de la bande basse.

Le signal résultant de la somme des deux voies est représenté en figure 6. Le RSB obtenu est constant sur toute la bande car le signal émis Se, comme le bruit de quantification Bq, ont été filtrés puis apparaissent atténués sur la bande haute supérieure à 30 MHz.

La figure 6 illustre plus précisément les courbes du signal effectif Se et du bruit de quantification Bq obtenus en fonction de la fréquence pour les montages précédents. Il apparaît que les circuits de traitement analogiques 35 et 36, tels qu'illustrés sur les figures 3 à 5, dans le cas d'un convertisseur ayant un nombre de bits effectifs proche de 10, permettent au bruit de quantification Bq de présenter un profil parallèle au signal effectif Se, respectivement dans la bande basse 0-30 MHz et dans la bande haute 30-100 MHz. Il s'en suit que le RSB reste constant sur toute la bande 0-100 MHz, et que ce RSB est d'environ 40 dB, niveau tout à fait acceptable, avec la limitation requise sur chaque bande de fréquences.

L'invention n'est pas limitée aux exemples de réalisation décrits et représentés. Il est par exemple possible de séparer les bandes en plus de deux bandes, d'appliquer une amplification (gain positif) à la place d'une atténuation, de filtrer en utilisant des filtres qui coupe une partie pouvant être disjointe de la bande, d'utiliser plus de deux voies certaines voies dédiées plus spécialement au filtrage, et les autres plus spécialement à l'application de gain, ou d'utiliser tout moyen équivalent aux moyens décrits sans sortir de l'invention.

## Revendications

1. Procédé de réduction de bruit de quantification pour la transmission d'un signal multiporteuse comportant une étape de transformation du signal fréquence-temps (20), une étape de conversion Numérique-Analogique (30) puis une étape de traitement analogique (35, 36) des fréquences du signal sur une bande présentant une fréquence maximale, **caractérisé en ce que** l'étape de traitement analogique comporte au moins deux voies (V1, V2) de traitement en parallèle du signal analogique, dans lesquelles : un filtrage analogique coupant une partie de la bande de fréquence (40) est appliqué sur au moins une des voies (V1) et, parallèlement, dans au moins une autre voie (V2), un gain (50) est appliquée au signal, puis dans une étape finale, les signaux issus des voies sont sommés (60).

2. Procédé de réduction de bruit de quantification selon la revendication 1, dans lequel une étape préalable de pré-égalisation (10) du signal adapte les puissances sur les porteuses afin de compenser au moins une étape ultérieure de filtrage analogique (40, 70).

3. Procédé de réduction de bruit de quantification pour la transmission d'un signal multiporteuse selon la revendication précédente, **caractérisé en ce que** dans la au moins deuxième voie (V2) de l'étape de traitement analogique, le signal est filtré (60) sur une bande de fréquences hautes comprenant les fréquences supérieures à la bande basses fréquences filtrées dans la première étape, jusqu'à la fréquence maximale du signal.

4. Procédé de réduction de bruit de quantification selon la revendication précédente, caractérisé en ce le filtrage passe-bande (70) de la au moins deuxième voie est effectué préalablement à l'atténuation du gain (50) de la même étape.

5. Dispositif de réduction de bruit de quantification pour la transmission d'un signal multiporteuse comportant un bloc IFFT (20) présentant une entrée couplée pour recevoir un signal numérique (S), un convertisseur DAC (30) présentant une entrée couplée pour recevoir le signal en sortie du bloc IFFT (20), puis au moins deux voies d'un circuit de traitement analogique (35, 36) couplées en sortie du convertisseur DAC (30), dont une voie (V1) de traitement comportant un filtre passe bas (4) et une voie (V2) comportant un amplificateur de gain atténuateur (50), les voies (V1, V2) étant combinées dans un sommateur (60).

6. Dispositif de réduction de bruit de quantification selon la revendication 5, dans lequel un pré-égaliseur (10) du signal numérique est couplé en entrée du bloc IFFT.

7. Dispositif de réduction de bruit de quantification selon la revendication 5 ou 6, dans lequel la au moins deuxième voie (V2) comporte en outre un filtre passe-bande (70).

8. Dispositif de réduction de bruit de quantification selon la revendication précédente, dans lequel le filtre passe-bande (70) est placé préalablement au gain atténuateur (50).

## Patentansprüche

1. Verfahren zum Verringern von Quantisierungsrauschen für die Übertragung eines Mehrfachträgersignals, das einen Schritt (20) für die Frequenz/Zeit-Transformation des Signals, einen Schritt (30) für die Digital/Analog-Umsetzung und dann einen Schritt (35, 36) für die analoge Verarbeitung von Frequenzen des Signals in einem Band, das eine Maximalfrequenz aufweist, umfasst, **dadurch gekennzeichnet, dass** der Schritt für die analoge Verarbeitung wenigstens zwei Wege (V1, V2) für die parallele Verarbeitung des analogen Signals enthält, in denen: eine analoge Filterung (40), die einen Teil des Frequenzbandes abschneidet, wenigstens auf einen der Wege (V1) angewendet wird und parallel in wenigstens einem anderen Weg (V2) eine Verstärkung (50) auf das Signal angewendet wird und dann in einem letzten Schritt die von den Wegen ausgegebenen Signale summiert werden (60).

2. Verfahren zum Verringern von Quantisierungsrauschen nach Anspruch 1, wobei ein vorhergehender Schritt (10) für die Vorentzerrung des Signals die Leistungen auf den Trägern anpasst, um wenigstens einen späteren Schritt (40, 70) für die analoge Filterung zu kompensieren.

3. Verfahren für die Verringerung von Quantisierungsrauschen für die Übertragung eines Mehrfachträgersignals nach dem vorhergehenden Anspruch, **dadurch gekennzeichnet, dass** wenigstens in dem zweiten Weg (V2) des Schrittes für die analoge Verarbeitung das Signal in einem Hochfrequenzband, das die Frequenzen oberhalb des Bandes niedriger Frequenzen, die in dem ersten Schritt gefiltert werden, bis zu der maximalen Frequenz des Signals enthält, gefiltert wird (60).

4. Verfahren zum Verringern von Quantisierungsrauschen nach dem vorhergehenden Anspruch, **dadurch gekennzeichnet, dass** die Passbandfilterung (70) des wenigstens einen zweiten Weges vor der Dämpfung der Verstärkung (50) desselben Schrittes ausgeführt wird.

5. Vorrichtung zum Verringern von Quantisierungsrauschen für die Übertragung eines Mehrfachträgersignals, die umfasst: einen IFFT-Block (20), der einen Eingang aufweist, der angeschlossen ist, um ein digitales Signal (S) zu empfangen, einen Umsetzer DAC (30), der einen Eingang aufweist, der angeschlossen ist, um das Signal am Ausgang des IFFT-Blocks (20) zu empfangen, dann wenigstens zwei Wege einer analogen Verarbeitungsschaltung (35, 36), die mit dem Ausgang des Umsetzers DAC (30) gekoppelt sind, wobei ein Verarbeitungsweg (V1) ein Tiefpassfilter (4) umfasst und ein Weg (V2) einen Verstärkungsdämpfungs-Verstärker (50) umfasst, wobei die Wege (V1, V2) in einem Summierer (60) kombiniert werden.

6. Vorrichtung zum Verringern von Quantisierungsrauschen nach Anspruch 5, wobei ein Vorentzerrer (10) für das digitale Signal mit dem Eingang des IFFT-Blocks gekoppelt ist.

7. Vorrichtung zum Verringern von Quantisierungsrauschen nach Anspruch 5 oder 6, wobei der wenigstens eine zweite Weg (V2) außerdem ein Passbandfilter (70) umfasst.

8. Vorrichtung zum Verringern von Quantisierungsrauschen nach dem vorhergehenden Anspruch, wobei das Passbandfilter (70) vor einem Dämpfungsverstärker (50) angeordnet ist.

## Claims

1. A method for reducing quantification noise for transmitting a multi-carrier signal comprising a frequency-time signal transformation step (20), a Digital-to-Analog conversion step (30) then an analog processing step (35,36) of the signal frequencies on a band having a maximal frequency, **characterized in that** the analog processing step comprises at least two processing paths (V1, V2) in parallel to the analog signal, in which: an analog filtering cutting a part of the frequency band (40) is applied on at least one first path (V1) and, in parallel, in at least one second path (V2), a gain (50) is applied to the signal, then in another final step, the signals from the paths are summed (60).

2. The method for reducing quantification noise according to claim 1, wherein a preliminary step of signal pre-equalization (10) adapts the powers on the carriers so as to offset at least a further step of analog filtering (40, 70).

3. The method for reducing quantification noise for transmitting a multi-carrier signal according to the preceding claim, **characterized in that** in the at least one second path (V2) of the analog processing step, the signal is filtered (60) on a high frequency band comprising the frequencies which are higher than the band of low frequencies filtered in the first step, to the maximal signal frequency.

4. The method for reducing quantification noise according to the preceding claim, **characterized in that** this band-pass filtering (70) of the at least one second path is carried out before the attenuation of the gain (50) of the same step.

5. A device for reducing quantification noise for transmitting a multi-carrier signal comprising an IFFT block (20) having an input coupled to receive a digital signal (S), a DAC converter (30) having an input coupled to receive the signal at the output of the IFFT block (20), then at least two paths of an analog processing circuit (35,36) coupled at the output of the DAC converter (30), in which one processing path (V1) comprising a low pass filter (4) and a path (V2) comprising an attenuator gain amplifier (50), the paths (V1,V2) being combined in a summer (60).

6. The device for reducing quantification noise according to claim 5, wherein a pre-equalizer (10) of the digital signal is coupled at the input of the IFFT block.

7. The device for reducing quantification noise according to claim 5 or 6, wherein the at least one second path (V2) also comprises a band-pass filter (70).

8. The device for reducing quantification noise according to the preceding claim, wherein the band-pass filter (70) is located prior to the attenuator gain (50).
